# FASCICULE DE BREVET EUROPEEN

(11) **EP 1 298 812 B1**
(45) Date de publication et mention de la délivrance du brevet: **11.03.2015**
(21) Numéro de dépôt: 01402498.8
(22) Date de dépôt: 27.09.2001
(51) Int. Cl.: H04B 1/69

(54) **Procédé et dispositif de décodage d'un signal incident impulsionnel du type à bande ultra large, en particulier pour un système de communication sans fil.**
Verfahren und Anordnung zur Dekodierung eines eintreffenden Ultra-Breitband Impulssignals, insbesondere für ein drahtloses Kommunikationssystem
Method and apparatus for decoding an incoming ultra wideband impulse signal, in particular for a wireless communication system

(43) Date de publication de la demande: 02.04.2003
(73) Titulaire: STMicroelectronics S.A., 92120 Montrouge (FR); STMicroelectronics N.V., 1077 XX Amsterdam (NL)
(72) Inventeur: Cattaneo, Chiara, 01630 St. Genis Pouilly (FR); Helal, Didier, 74160 St. Julien en Genevois (FR); Arnaud, Thierry, 74330 Poisy (FR); Lebowsky, Fritz, Palo Alto, CA 94303 (US); Cattenoz, Régis, 74100 Annemasse (FR)
(74) Mandataire: Casalonga, Axel

(56) Documents cités:
- US-A- 5 677 927
- US-A- 5 832 035
- US-A- 5 901 172
- DICKSON D ET AL: "An application specific integrated circuit implementation of a multiple correlator for UWB radio applications" MILCOM 1999. IEEE MILITARY COMMUNICATIONS. CONFERENCE PROCEEDINGS (CAT. NO.99CH36341), PROCEEDINGS OF CONFERENCE ON MILITARY COMMUNICATIONS (MILCOM'99), ATLANTIC CITY, NJ, USA, 31 OCT.-3 NOV. 1999, pages 1207-1210 vol.2, XP010369820 1999, Piscataway, NJ, USA, IEEE, USA ISBN: 0-7803-5538-5
- WIN M Z ET AL: "ULTRA-WIDE BANDWIDTH TIME-HOPPING SPREAD-SPECTRUM IMPULSE RADIO FORWIRELESS MULTIPLE-ACCESS COMMUNICATIONS" IEEE TRANSACTIONS ON COMMUNICATIONS, IEEE INC. NEW YORK, US, vol. 48, no. 4, avril 2000 (2000-04), pages 679-691, XP000932191 ISSN: 0090-6778

## Description

L'invention concerne la technologie radio du type à bande ultra large (UWB « Ultra Wide Band » en langue anglaise) et plus particulièrement le décodage d'un signal incident impulsionnel du type à bande ultra large véhiculant des informations numériques codées.

US 5 677 927 divulgue un récepteur UWB analogique.

L'invention s'applique avantageusement mais non limitativement à la transmission de telles informations dans le cadre d'un réseau de transmission local sans fil.

La technologie du type à bande ultra large se distingue des technologies à bande étroite et spectre étalé, en ce sens que la largeur de bande du signal de type ultra large bande est typiquement comprise entre environ 25% et environ 100% de la fréquence centrale.

Par ailleurs, au lieu de transmettre une porteuse continue modulée avec de l'information ou avec de l'information combinée avec un code d'étalement, ce qui détermine la largeur de bande du signal, la technologie ultra large bande prévoit la transmission d'une série d'impulsions très étroites. Par exemple, ces impulsions peuvent prendre la forme d'un seul cycle, ou monocycle, ayant une largeur d'impulsion inférieure à 1 ns. Ces impulsions extrêmement courtes dans le domaine temporel, transformées dans le domaine fréquentiel, conduisent à l'obtention du spectre à bande ultra large caractéristique de la technologie UWB.

Dans la technologie UWB, l'information véhiculée sur le signal peut être codée par exemple par une modulation dite « de position d'impulsion » (PPM ;« Pulse Position Modulation » en langue anglaise). En d'autres termes, le codage d'information s'effectue en altérant l'instant d'émission des impulsions individuelles. Plus précisément, le train d'impulsions est émis à une fréquence de répétition pouvant aller jusqu'à plusieurs dizaines de MHz. Chaque impulsion est transmise dans une fenêtre de longueur prédéterminée, par exemple 50 ns. Par rapport à une position théorique d'émission, l'impulsion est alors en avance ou en retard, ce qui permet de coder un « 0 » ou un « 1 ». Il est également possible de coder plus de deux valeurs en utilisant plus de deux positions décalées par rapport à la position de référence. Il est également possible de superposer à cette modulation en position une modulation BPSK.

A la réception du signal ainsi transmis, il est donc nécessaire de décoder ces impulsions pour déterminer la valeur des informations numériques véhiculées.

Un tel traitement de décodage s'effectue essentiellement de façon analogique en utilisant un corrélateur analogique, ce qui nécessite une réalisation matérielle relativement complexe.

Par ailleurs, le système de corrélation est affecté à une position fixe au sein de chaque fenêtre d'émission des impulsions. Par conséquent, le nombre de chaînes de corrélation doit être égal au nombre de niveaux de modulation en position.

En outre, une telle architecture implique d'être parfaitement synchronisé pour trouver la bonne modulation en position et la bonne polarité des différents symboles. Cette synchronisation est effectuée par des moyens logiciels très complexes puisque seul un nombre limité d'observations est possible. Par ailleurs, la précision de l'horloge, typiquement quelques picosecondes, est un paramètre très contraignant, à la fois du point de vue technologique et du point de vue consommation de courant.

L'invention vise à apporter une solution à ces problèmes.

L'invention propose un dispositif de décodage d'un signal incident impulsionnel du type à bande ultra large véhiculant des informations numériques codées en utilisant des impulsions de forme théorique connue.

Selon une caractéristique générale de l'invention, le dispositif comprend
- des moyens d'entrée, par exemple une antenne, pour recevoir le signal incident et délivrer un signal de base,
- des moyens de prétraitement recevant le signal de base et aptes à délivrer un signal intermédiaire représentatif du signe du signal de base par rapport à une référence, par exemple à tension nulle,
- des moyens d'échantillonnage du signal intermédiaire aptes à délivrer un signal numérique, et
- des moyens numériques de traitement comportant des moyens de synchronisation et des moyens de décodage aptes à effectuer une corrélation du signal numérique avec un signal de corrélation de référence correspondant à un signal de base théorique issu de la réception d'au moins une impulsion théorique ayant ladite forme théorique connue.

En d'autres termes, l'invention permet de détecter une impulsion de type ultra large bande au moyen du signe du signal reçu, échantillonné puis corrélé avec un signal numérique de corrélation prédéterminé.

Outre le fait d'utiliser un signal binaire représentatif du signe du signal incident pour la détection des impulsions, l'invention prévoit d'effectuer tous les traitements (notamment la détection des impulsions, la synchronisation, le décodage) de façon numérique, ce qui simplifie la réalisation matérielle du dispositif.

Par ailleurs, dans l'art antérieur, qui utilise une solution analogique, soit l'information située en dehors des instants de capture est perdue (dans le cas par exemple d'une modulation de position), soit les impulsions sont détectées globalement (dans le cas par exemple d'une modulation BPSK). Par contre, selon l'invention, il est possible d'effectuer continuement un échantillonnage du signe du signal avec une résolution plus fine que la largeur des impulsions et de choisir les meilleurs instants d'échantillonnage pour effectuer les traitements numériques, et notamment la corrélation.

De plus, dans le domaine des réseaux de communication sans fil, les terminaux utilisent généralement des récepteurs Rake, selon une dénomination bien connue de l'homme du métier, qui comportent plusieurs « doigts » (ou « fingers ») affectés aux différents trajets d'un canal de transmission multi-trajets.

Or, lorsqu'une solution analogique est utilisée pour la détection des impulsions UWB, il est alors nécessaire de dupliquer des parties de la chaîne de réception autant de fois qu'il y a de doigts.

Par contre, selon l'invention, l'échantillonnage continuel du signe du signal permet une observation « continue » du signal et il est alors possible de détecter des trajets multiples dans un environnement multi-trajets sans effectuer de duplication de la chaîne de réception.

Par ailleurs, selon l'invention, la procédure de synchronisation est simplifiée par comparaison aux algorithmes proposés dans l'art antérieur. En effet, en raison de la possibilité d'obtenir une observation « continue », il est seulement nécessaire d'effectuer une corrélation avec un en-tête de synchronisation comportant un code de synchronisation prédéterminé.

Selon un mode de réalisation de l'invention, les moyens d'échantillonnage comportent des moyens de conversion série/parallèle aptes à délivrer successivement à une fréquence de délivrance prédéterminée Fe, des groupes de N échantillons en parallèle, ce qui correspond à une fréquence effective d'échantillonnage du signal intermédiaire égale à N.Fe.

A titre d'exemple, lorsque les impulsions ont une fréquence centrale de quelques GHz, la fréquence effective d'échantillonnage peut être supérieure à 10 GHz. Et, le fait d'utiliser des moyens de conversion série/parallèle permet de travailler avec un signal d'horloge à la fréquence Fe, par exemple quelques centaines de MHz, et d'obtenir une fréquence effective d'échantillonnage de l'ordre de 20 GHz, voire plus, ce que les convertisseurs analogique/numérique actuels ne peuvent pas réaliser. En pratique, N pourra être une puissance entière de 2, par exemple 7.

Les moyens de conversion série/parallèle comportent avantageusement :
- un circuit d'horloge programmable recevant un signal d'horloge de base ayant la fréquence Fe et délivrant N signaux d'horloge élémentaires ayant tous la même fréquence Fe mais mutuellement temporellement décalés de 1/N.Fe,
- N bascules recevant en entrée le signal intermédiaire, respectivement commandées par les N signaux d'horloge élémentaires, et délivrant respectivement les N échantillons, et
- un registre de sortie commandé par le signal d'horloge de base pour stocker les N échantillons délivrés par les N bascules et les délivrer en parallèle à la fréquence de délivrance.

Le circuit d'horloge programmable comprend de préférence une boucle numérique à verrouillage de phase comportant un oscillateur programmable en anneau délivrant les N signaux d'horloge élémentaires et commandé à partir d'un circuit de commande recevant les sorties respectives de N bascules, ces N bascules recevant le signal d'horloge de base et étant respectivement commandées par les N signaux d'horloge élémentaires.

L'utilisation d'une boucle numérique à verrouillage de phase en combinaison avec les moyens de conversion série/parallèle, permet d'obtenir une précision meilleure que quelques dizaines de picosecondes pour les déphasages mutuels (décalages temporels mutuels) des N signaux d'horloge élémentaires.

Ainsi, selon l'invention, il est possible de détecter l'instant d'arrivée d'une impulsion avec une résolution égale à la précision des N signaux d'horloge élémentaires.

Les moyens d'échantillonnage, et notamment la boucle numérique à verrouillage de phase, sont réalisés avantageusement en technologie CMOS, ce qui permet notamment de pouvoir placer les moyens d'échantillonnage et les moyens numériques de traitement dans un mode de veille au cours d'intervalles temporels prédéterminés. En d'autres termes, on peut mettre facilement le système en marche/arrêt, ce qui permet des économies d'énergie importantes.

Selon un mode de réalisation de l'invention, le signal de corrélation de référence est formé d'échantillons de référence. Les traitements numériques effectués par les moyens de synchronisation et les moyens de décodage comportent alors une corrélation glissante entre les échantillons du signal numérique délivrés par les moyens d'échantillonnage et les échantillons de référence.

Lorsque les informations sont véhiculées au sein de trames comprenant chacune une en-tête de synchronisation comportant au moins un segment de longueur Ts contenant un code de synchronisation formé de plusieurs impulsions théoriques ayant ladite forme théorique connue, le traitement numérique effectué par les moyens de synchronisation lors de la réception d'une en-tête de synchronisation comporte alors par exemple une corrélation glissante entre N5 échantillons de référence et un ensemble de N3 échantillons de signal numérique délivrés par les moyens d'échantillonnage, ces N3 échantillons correspondant à une durée de signal supérieure à Ts de façon à tenir compte d'une longueur estimée du canal de transmission. En outre, dans cette phase de synchronisation, les N5 échantillons de référence correspondent à une longueur Ts de signal et à un signal de base théorique issu de la réception du code de synchronisation. Puis, les moyens de synchronisation effectuent une détection du code de synchronisation avec éventuellement des permutations circulaires de ce code, à partir du résultat de la corrélation.

Il convient de noter ici que le résultat de la corrélation peut consister en la détection de maxima ou bien, ce qui est plus robuste, en la détection des franchissements du seuil de référence (0 par exemple).

Ceci étant, généralement, l'en-tête de synchronisation comporte plusieurs segments de même longueur Ts contenant respectivement des codes de synchronisation identiques. Les moyens de synchronisation comportent alors en outre de préférence des moyens aptes à effectuer une série d'intégrations cohérentes du signal numérique, ce qui permet notamment de s'affranchir du bruit.

Bien que cela ne soit pas indispensable, il est préférable que le dispositif comporte en outre des moyens d'estimation de la réponse du canal de transmission. Ces moyens d'estimation sont alors aptes à effectuer également un traitement numérique comportant une corrélation du signal numérique avec le signal de corrélation de référence. Ceci permet d'avoir une bonne approximation de la réponse du canal de transmission, ce qui va par la suite faciliter le décodage des informations.

Ainsi, selon un mode de réalisation dans lequel chaque trame comporte en outre une deuxième partie contenant au moins une impulsion ayant une polarité connue et un décalage temporel connu par rapport à l'en-tête de synchronisation, le traitement numérique effectué par les moyens d'estimation de canal comporte le stockage à partir d'un instant séparé de l'en-tête de synchronisation dudit décalage temporel, d'un nombre prédéterminé N4 d'échantillons du signal numérique délivré par les moyens d'échantillonnage, et une corrélation glissante entre N2 échantillons de référence et l'ensemble de N4 échantillons du signal numérique, de façon à obtenir un vecteur de N4 valeurs de corrélation de référence. Dans ce cas, les N2 échantillons de référence (N2 = 9 par exemple) correspondent à un signal de base théorique issu de la réception d'une seule impulsion théorique.

Là encore, généralement, la deuxième partie de la trame comporte plusieurs impulsions de polarité connue régulièrement espacées d'intervalles temporels correspondant à N4 échantillons du signal numérique. Les moyens d'estimation de canal comportent alors de préférence en outre des moyens aptes à effectuer une série d'intégrations cohérentes du signal numérique. Ceci permet là encore de s'affranchir du bruit.

Ce vecteur de N4 valeurs de corrélation de référence va avantageusement être utilisé dans le décodage des données.

Plus précisément, lorsque la trame comporte une troisième partie contenant des impulsions dites « utiles », c'est-à-dire comportant de l'information au sens de l'utilisateur final du système de communication sans fil, chaque impulsion ayant une position temporelle de référence connue dans la trame, le traitement numérique effectué par les moyens de décodage comporte avantageusement, à partir de l'instant supposé de réception d'une impulsion utile courante, le stockage de N4 échantillons du signal numérique, une corrélation glissante entre les N4 échantillons stockés et les N2 échantillons de référence, de façon à obtenir un vecteur de N4 valeurs utiles de corrélation associé à cette impulsion utile courante, et la comparaison de ce vecteur utile de corrélation avec le vecteur de N4 valeurs de corrélation de référence, ou éventuellement lorsque les impulsions sont codées avec une modulation de position d'impulsions (modulation PPM) avec ce vecteur de référence temporellement retardé ou avancé d'un décalage prédéterminé correspondant au décalage utilisé dans la modulation PPM.

L'invention a également pour objet un terminal d'un système de communication sans fil, incorporant un dispositif de décodage tel que défini ci-avant.

L'invention a également pour objet un procédé de décodage d'un signal incident impulsionnel du type à bande ultra large véhiculant des informations numériques codées en utilisant des impulsions de forme théorique connue, comportant au moins une phase de synchronisation et une phase de décodage. (Ces phases de synchronisation et de décodage pouvant être entrelacées ou non).

Selon une caractéristique générale de l'invention, le procédé de décodage comprend une réception du signal incident de façon à obtenir un signal de base, un échantillonnage d'un signal intermédiaire représentatif du signe du signal de base par rapport à une référence, de façon à obtenir un signal numérique, et la phase de synchronisation et la phase de décodage comprennent des traitements numériques du signal numérique comportant une corrélation du signal numérique avec un signal de corrélation de référence correspondant à un signal de base théorique issu de la réception d'au moins une impulsion théorique ayant ladite forme théorique connue.

Selon un mode de mise en oeuvre, l'échantillonnage comporte une conversion série/parallèle de façon à délivrer successivement à une fréquence de délivrance prédéterminée Fe, des groupes de N échantillons en parallèle, ce qui correspond à une fréquence effective d'échantillonnage du signal intermédiaire égale à N.Fe.

Les impulsions ont par exemple une fréquence centrale de quelques GHz, la fréquence effective d'échantillonnage étant supérieure à 10 GHz.

N peut être une puissance entière de 2 et la fréquence effective d'échantillonnage est par exemple de l'ordre de 20 GHz, avec une fréquence de délivrance Fe de l'ordre de 200 MHz.

D'autres avantages et caractéristiques de l'invention apparaîtront à l'examen de la description détaillée de modes de réalisation et de mise en oeuvre, nullement limitatifs, et des dessins annexés, sur lesquels :
- la figure 1 illustre schématiquement un signal incident du type à bande ultra large ;
- la figure 2 illustre plus en détail mais toujours schématiquement un codage d'un bit par une modulation du type à position d'impulsion (modulation PPM) ;
- la figure 3 illustre plus en détail l'une des impulsions du signal incident de la figure 1 ;
- la figure 4 illustre plus en détail l'une des impulsions du signal de base résultant de la réception du signal incident par le système de réception ;
- la figure 5 illustre schématiquement un mode de réalisation d'un dispositif de détection selon l'invention ;
- les figures 6 et 7 illustrent plus en détail mais toujours schématiquement un mode de réalisation des moyens d'échantillonnage du dispositif de la figure 5 ;
- la figure 8 représente un chronogramme temporel schématique des différents signaux d'horloge utilisés dans les moyens d'échantillonnage ;
- la figure 9 illustre plus en détail, mais toujours de façon schématique, un mode de réalisation des moyens de traitement numérique du dispositif de la figure 5 ;
- la figure 10 illustre un signal de corrélation de référence ;
- la figure 11 illustre schématiquement les différents traitements et moyens mis en oeuvre pour le décodage de données véhiculées au sein d'une trame de transmission ;
- les figures 12 et 13 illustrent schématiquement une mise en oeuvre de la synchronisation et un mode de réalisation des moyens correspondants, utilisant un signal de corrélation de référence tel que par exemple celui illustré sur la figure 10 ;
- les figures 14 et 15 illustrent schématiquement une mise en oeuvre d'une estimation de canal et un mode de réalisation des moyens correspondants, utilisant également un signal de corrélation de référence tel que par exemple celui illustré sur la figure 10 ; et
- la figure 16 illustre schématiquement un mode de mise en oeuvre du décodage de données proprement dit.

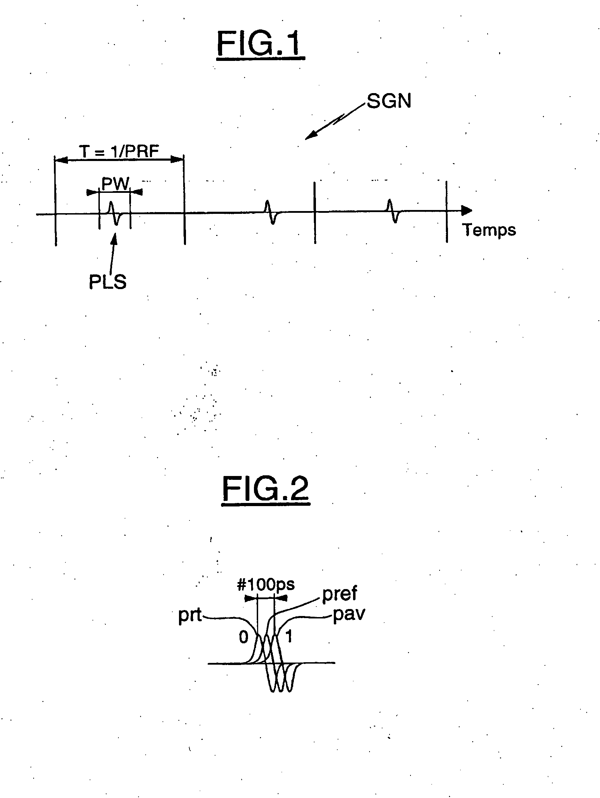

Sur la figure 1, la référence SGN désigne un signal impulsionnel initial du type à bande ultra large, comportant des impulsions PLS de forme théorique connue. Plus précisément, ces impulsions PLS ont une largeur temporelle prédéterminée PW, par exemple typiquement inférieure à 1 ns, par exemple de l'ordre de 360 picosecondes. Les impulsions successives PLS sont respectivement contenues dans des fenêtres temporelles successives de longueur T égale à l'inversé de la fréquence de répétition des impulsions (« Pulse Repetition Frequency » PRF selon une dénomination anglosaxonne). A titre indicatif, la longueur T de chaque fenêtre temporelle est par exemple égale à 50 ns. La position de chaque impulsion dans une fenêtre temporelle peut varier d'une fenêtre à l'autre en fonction d'un code pseudo-aléatoire. En outre, lorsque le signal véhicule des informations codées avec une modulation de position (modulation PPM), l'impulsion peut, comme illustrée sur la figure 2, être légèrement en avance (pav) ou légèrement en retard (prt) par rapport à la position de référence (pref) de l'impulsion dans la fenêtre, en fonction de la valeur « 0 » ou « 1 » de l'information transmise.

Les impulsions PLS possèdent des caractéristiques d'une impulsion du type à bande ultra large en ce sens que le rapport de la largeur de bande de l'impulsion à mi-puissance sur la fréquence centrale est supérieur à 1/4. A titre indicatif, la fréquence centrale d'une impulsion peut varier entre 2 et 4 GHz.

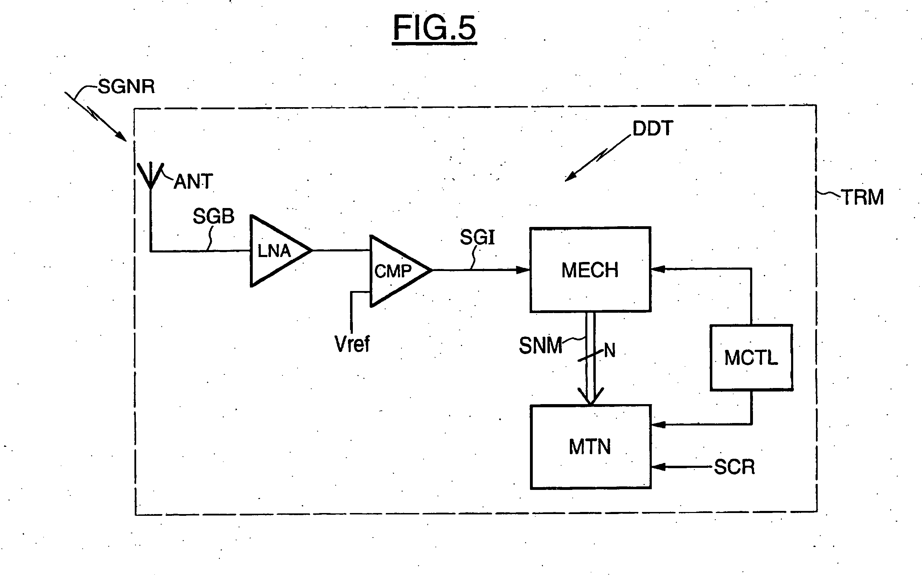

Le dispositif de détection DDT selon l'invention, dont un mode de réalisation est illustré sur la figure 5, va permettre de détecter la présence ou l'absence d'impulsion dans le signal, et dans le cas où une impulsion est présente, son instant d'arrivée et sa polarité. Le dispositif DDT va plus particulièrement permettre le décodage des données binaires après avoir effectué une synchronisation et une estimation de canal. Ce dispositif peut par exemple être incorporé dans un terminal TRM d'un système de communication sans fil du type réseau local.

Plus précisément, ce dispositif DDT comporte, dans l'application particulière mais non limitative qui est illustrée ici, une antenne ANT pour recevoir le signal incident SGNR résultant de la transmission du signal SGN sur un canal de transmission qui peut être multi-trajets.

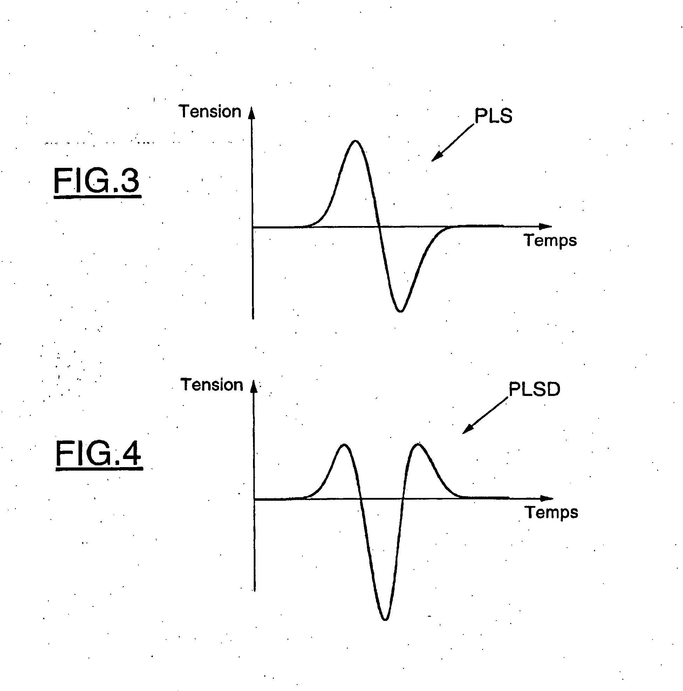

L'antenne ANT forme des moyens d'entrée qui délivrent un signal de base SGB à partir du signal incident SGNR. Le signal de base SGB est également un signal impulsionnel du type à bande ultra large. Cependant, après passage dans l'antenne ANT, la forme des impulsions PLSD formant ce signal SGB est illustrée sur la figure 4, et elle diffère de la forme des impulsions PLS illustrée sur la figure 3.

En d'autres termes, l'impulsion PLSD est la réponse théorique du système à la réception d'une impulsion PLS. Bien entendu, cette réponse théorique varie en fonction des caractéristiques des moyens de réception.

Le signal de base SGB est ensuite amplifié dans des moyens d'amplification à faible bruit LNA. Le signal de sortie de l'amplificateur LNA est ensuite comparé à une tension de référence Vref (par exemple la valeur zéro) dans un comparateur CMP.

Le comparateur CMP délivre alors un signal intermédiaire SGI représentatif du signe du signal de base SGB, et par conséquent du signe du signal incident, par rapport à la référence Vref.

Le signal intermédiaire SGI va ensuite être échantillonné dans des moyens d'échantillonnage MECH. Ces moyens d'échantillonnage MECH vont, comme on va le voir plus en détail ci-après, délivrer des groupes successifs de N échantillons. Tous ces échantillons vont ensuite être traités dans des moyens numériques de traitement comportant pour l'essentiel des moyens de corrélation aptes à effectuer une corrélation du signal numérique SNM délivrée par les moyens d'échantillonnage avec un signal de corrélation numérique prédéterminé SCR. Le résultat de cette corrélation va permettre de détecter la présence éventuelle d'une impulsion, mais également d'effectuer la synchronisation, l'estimation de canal et le décodage.

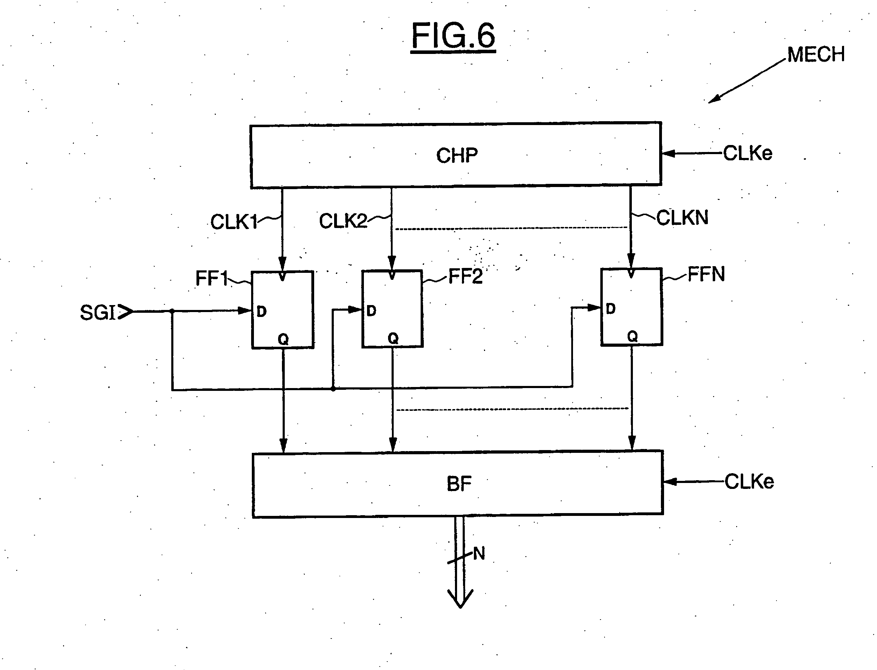

La fréquence centrale des impulsions du signal pouvant être de l'ordre de plusieurs GHz, il est nécessaire que la fréquence d'échantillonnage du signal numérique soit très élevée, c'est-à-dire supérieure par exemple à 10 GHz. Une façon particulièrement simple et facile à réaliser, pour échantillonner un signal à 10 GHz, peut consister à utiliser des moyens de conversion série/parallèle tels que ceux illustrés sur la figure 6.

Plus précisément, ces moyens de conversion série/parallèle vont délivrer successivement à une fréquence de délivrance prédéterminée Fe, par exemple de l'ordre de 200 MHz, des groupes de N échantillons en parallèle, ce qui va correspondre à une fréquence effective d'échantillonnage du signal intermédiaire égale à N.Fe. Ainsi, N peut être par exemple choisi égal à 2^{m}, m pouvant être égal à 7 par exemple, ce qui conduit alors à l'obtention de groupes de 128 échantillons. La fréquence effective d'échantillonnage sera alors supérieure à 20 GHz.

Matériellement, ces moyens de conversion série/parallèle comportent un circuit d'horloge programmable CHP recevant un signal d'horloge de base CLKe ayant la fréquence Fe et délivrant N signaux d'horloge élémentaires CLK1-CLKN ayant tous la même fréquence Fe mais mutuellement temporellement décalés de 1/N.Fe. Ainsi, à titre indicatif, ces signaux d'horloge pourront être mutuellement temporellement décalés de l'ordre de 50 picosecondes, par exemple.

Les moyens de conversion série/parallèle comportent également N bascules D, respectivement référencées FF1-FFN. Ces bascules sont respectivement commandées par les N signaux d'horloge élémentaires CLK1-CLKN et elles reçoivent toutes en entrée le signal intermédiaire SGI issu du comparateur CMP.

Au rythme des fronts montants successifs des différents signaux d'horloge élémentaires CLK1-CLKN, le signal intermédiaire SGI va donc être échantillonné et les N échantillons successifs vont être stockés dans un registre de sortie BF commandé par le signal d'horloge de base CLKe. A chaque front montant de ce signal d'horloge de base CLKe (les fronts montants étant espacés d'une durée Te représentant la période de ce signal d'horloge de base), les N échantillons vont être délivrés en parallèle.

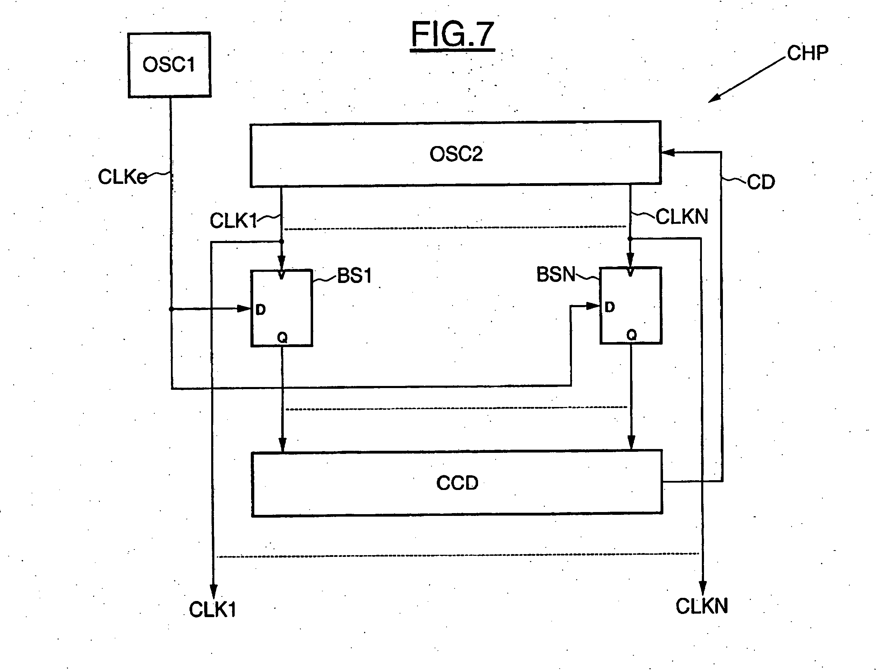

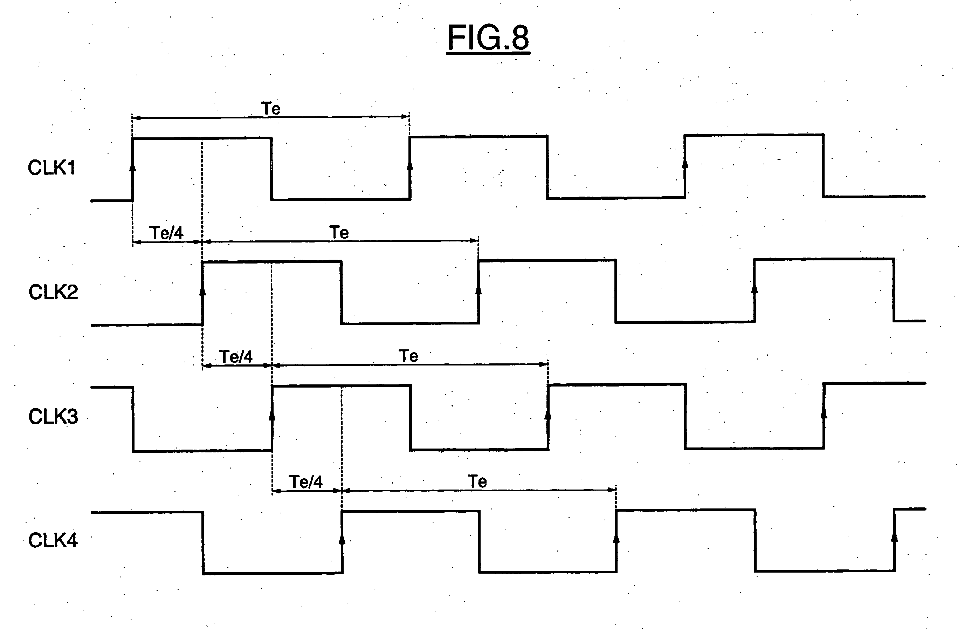

A titre d'exemple, on peut se référer à la figure 8, sur laquelle on a représenté à des fins de simplification uniquement quatre signaux d'horloge élémentaires CLK1-CLK4 (correspondant à N=4). En fait, comme on le voit sur la figure 7, le signal d'horloge de base CLKe est l'un des signaux d'horloge élémentaires, par exemple le signal CLK1.

En pratique, le circuit d'horloge programmable CHP peut être composé d'une horloge, par exemple un quartz, et d'un certain nombre d'éléments de retard montés en série à la sortie de l'horloge. A cet égard, l'homme du métier pourra éventuellement se référer à la demande de brevet européen n° 0 843 418.

L'une des difficultés de cet échantillonnage à très haute fréquence, réside dans le fait qu'il convient de délivrer les signaux d'horloge élémentaires avec une précision (« jitter » en langue anglaise) très faible, par exemple de l'ordre de quelques picosecondes. C'est la raison pour laquelle il est alors avantageux que le circuit d'horloge programmable CHP comprenne une boucle numérique à verrouillage de phase comportant (figure 7) par exemple un oscillateur programmable en anneau OSC2, délivrant les N signaux d'horloge élémentaires CLK1-CLKN. Cet oscillateur en anneau est commandé à partir d'un circuit de commande CCD, recevant les sorties respectives de N bascules BS1-BSN. Ces N bascules sont respectivement commandées par les N signaux d'horloge élémentaires CLK1-CLKN et reçoivent sur leur entrée D le signal d'horloge de base CLKe issu par exemple d'un oscillateur classique à quartz OSC1.

L'homme du métier pourra, à cet égard, se référer, si nécessaire, au brevet américain n° 6 208 182, en ce qui concerne notamment la commande de l'oscillateur en anneau. On en rappelle ici cependant les principes généraux. Le circuit de commande CCD comporte des moyens pour comparer des échantillons deux à deux, de façon à déterminer si une transition d'état s'est produite dans un intervalle temporel séparant les deux échantillons, cette comparaison étant effectuée sur au moins deux cycles, consécutifs ou non, de l'oscillateur en anneau. Cette comparaison est effectuée de sorte que :
- si, durant le second cycle, une transition d'état comparable est détectée dans le même intervalle, la commande de l'oscillateur en anneau n'est pas modifiée,
- si, durant le second cycle, une transition d'état comparable est détectée dans un intervalle ultérieur, la période de l'oscillateur en anneau est diminuée, et
- si, durant le second cycle, une transition d'état comparable est détectée dans un intervalle antérieur, la période de l'oscillateur en anneau est augmentée.

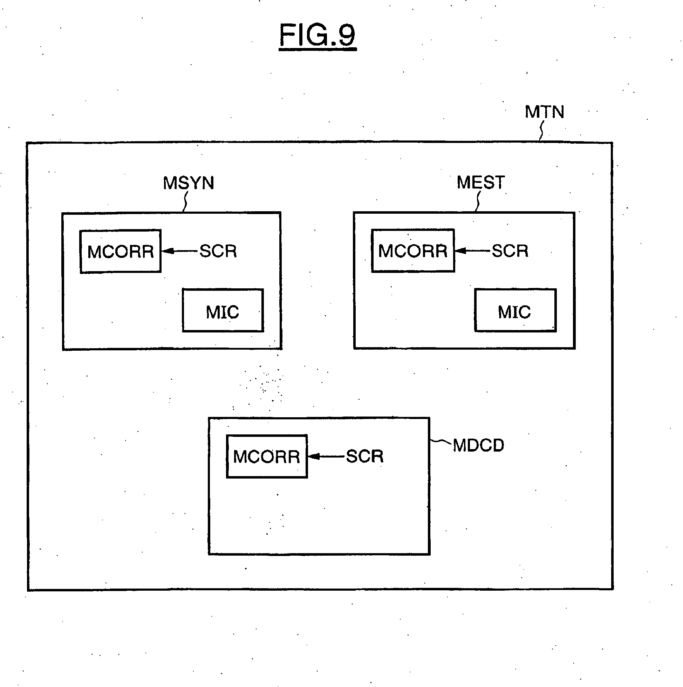

Si l'on se réfère maintenant à la figure 9, on voit que les moyens numériques de traitement MTN comportent pour l'essentiel des moyens de synchronisation MSYN, des moyens d'estimation du canal MEST et des moyens de décodage des données utiles MDCD.

Tous ces moyens comportent par ailleurs des moyens de corrélation MCORR qui vont effectuer une corrélation numérique du signal délivré par les moyens d'échantillonnage avec un signal de corrélation de référence SCR.

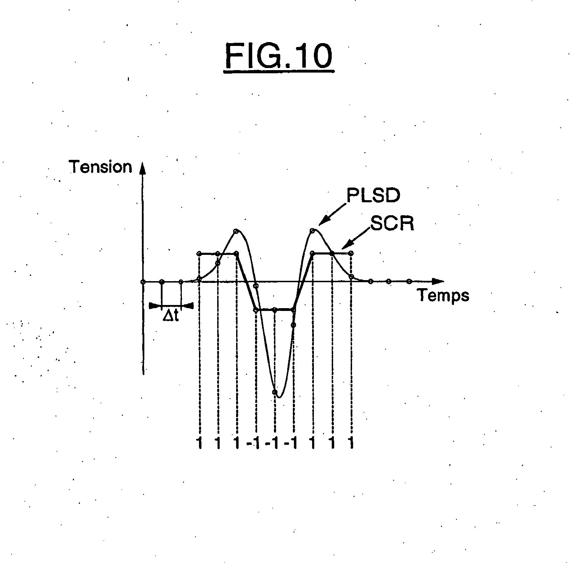

Dans l'exemple qui est décrit, et puisque les impulsions ont une forme connue, le signal de corrélation de référence est un signal numérique de référence correspondant à la forme d'au moins une impulsion après passage dans les moyens d'entrée. Plus précisément, comme illustré sur la figure 10, le signal numérique de référence SCR est par exemple un profil de neuf échantillons dont la forme générale correspond à la forme générale d'une impulsion PLSD. Chaque échantillon est séparé temporellement d'une distance Δt=1/N.Fe. Le signal de référence SCR est donc, dans le cas présent, un bloc de neuf échantillons ayant respectivement pour valeur 111-1-1-1111. Ceci étant, comme on va le voir ci-après, le signal de référence SCR peut correspondre à plusieurs impulsions PLSD et comporter alors un nombre plus important d'échantillons.

Les moyens de corrélation MCORR vont d'une façon générale effectuer une corrélation glissante entre les échantillons du signal numérique délivrés par les moyens d'échantillonnage et les échantillons de référence du signal SCR.

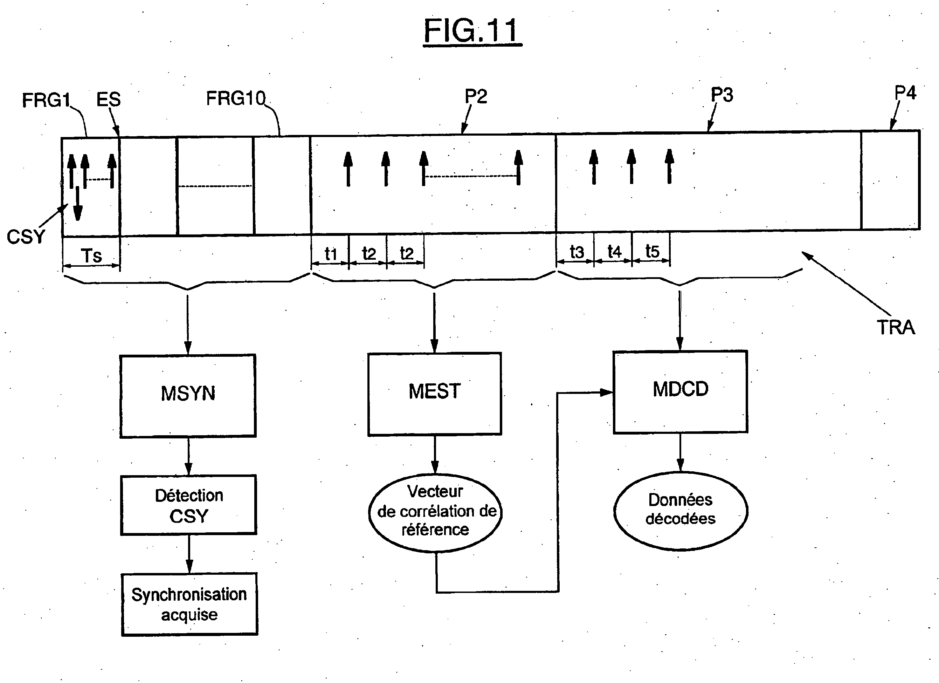

On va maintenant se référer plus particulièrement aux figures 11 et suivantes pour décrire la synchronisation, l'estimation de canal et de décodage de données que l'on suppose être véhiculées au sein d'une trame TRA.

Cette trame TRA comporte une en-tête de synchronisation ES ayant par exemple une durée de l'ordre de quelques microsecondes. Cette en-tête de synchronisation ES est subdivisée ici en plusieurs segments de longueur identique Ts, par exemple en dix segments FRG1-FRG10.

Chaque segment FRGᵢ contient un code de synchronisation identique CSY composé par exemple de sept impulsions ayant des polarités et des positions connues.

Sur la figure 11, les flèches du code CSY désignent les différentes impulsions avec leurs polarités respectives.

La longueur Ts correspond à un ensemble de N5 échantillons. Le signal de corrélation de référence comporte alors N5 échantillons correspondant à plusieurs impulsions PLSD formant le code de synchronisation.

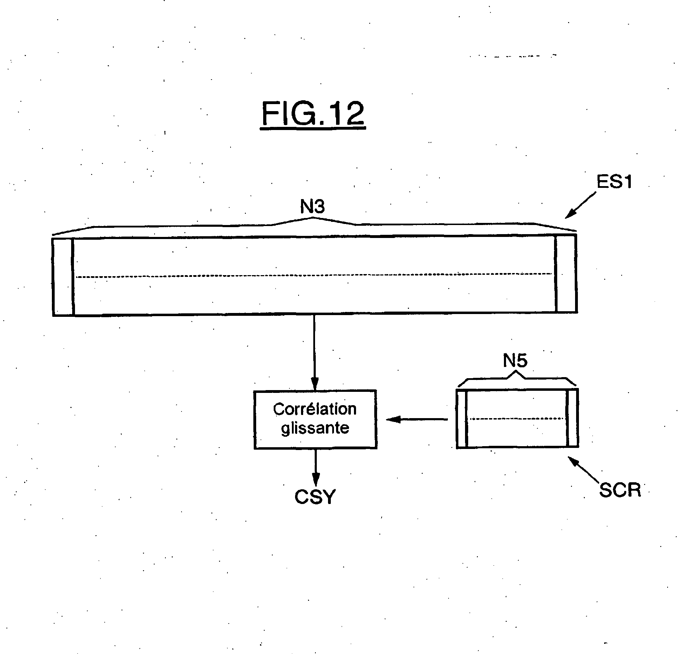

En théorie, il serait possible d'acquérir la synchronisation en utilisant un seul ensemble ES1 de N3 échantillons délivrés par les moyens d'échantillonnage (figure 12), en effectuant une corrélation glissante entre ces N3 échantillons et les N5 échantillons du signal de corrélation de référence SCR. A cet égard, N3 est supérieur à N5 et correspond à une longueur de signal supérieure à Ts, en pratique égale à TS + L, où L est une longueur estimée pour le canal de transmission.

Les moyens de synchronisation MSYN vont alors détecter les différents maximum parmi les valeurs de corrélation, ce qui va permettre de détecter la présence et l'instant d'arrivée des impulsions ainsi que leurs polarités selon le signe de ces valeurs maximales, et par conséquent vont permettre de détecter le code de synchronisation CSY. En variante, il est possible de détecter uniquement les passages par « 0 » de l'ensemble des valeurs de corrélation.

Il convient de noter ici que l'on détectera le code de synchronisation CSY si l'ensemble de N3 échantillons sur lequel on effectue la corrélation glissante correspond à un segment entier de l'en-tête de synchronisation. Si, par contre, cet ensemble de N3 échantillons s'étend à cheval sur deux segments consécutifs, on détectera alors une permutation circulaire du code de synchronisation.

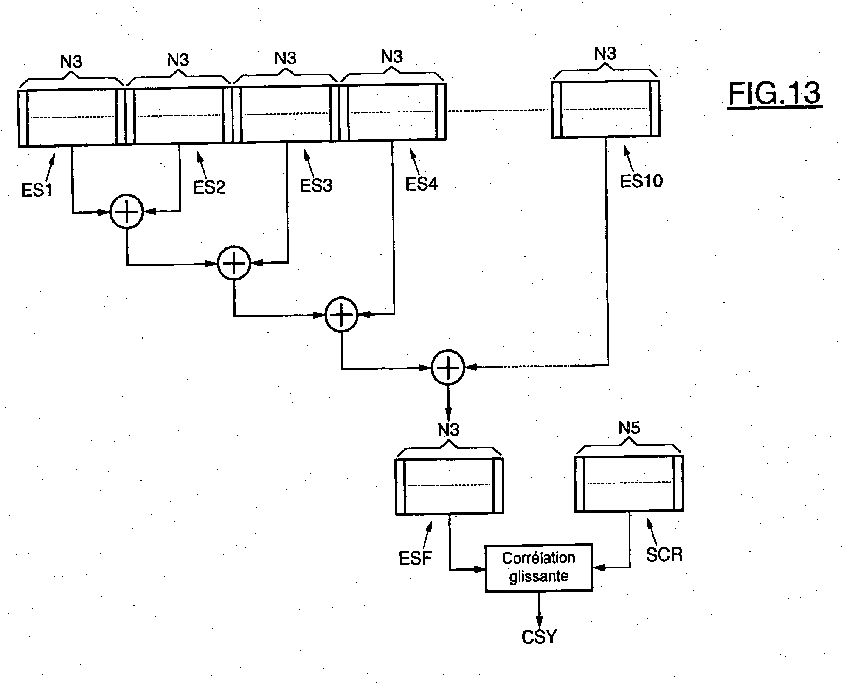

Ceci étant, en pratique, le signal SGNR qui arrive sur l'antenne est bruité. C'est la raison pour laquelle il est préférable que les moyens de synchronisation MSYN comportent en outre des moyens MIC (figure 9) qui sont aptes à effectuer une série d'intégrations cohérentes du signal numérique. De telles intégrations cohérentes sont parfaitement connues en soi par l'homme du métier. Dans le cas présent, en pratique, comme illustré sur la figure 13, elles peuvent consister à effectuer des sommations d'échantillons homologues desdits ensembles successifs de N3 échantillons ES1-ES10 (correspondant en nombre d'échantillons à la longueur desdits segments de l'en-tête de synchronisation) de façon à obtenir en final un ensemble final ESF de N3 échantillons sur lequel les moyens de corrélation vont effectuer la corrélation glissante en utilisant les N5 échantillons de référence.

Cette corrélation glissante va permettre, comme indiqué ci-avant, de détecter le code de synchronisation CSY avec éventuellement les permutations circulaires de ce code.

Une fois cette détection effectuée, la synchronisation est acquise et l'on peut alors passer à l'étape suivante du procédé qui consiste ici à effectuer une estimation de la réponse impulsionnelle du canal.

Pour déterminer cette réponse impulsionnelle du canal, les moyens d'estimation de canal MEST vont utiliser une deuxième partie P2 (figure 11) de la trame TRA.

Cette deuxième partie P2 contient en théorie au moins une impulsion ayant une polarité connue et un décalage temporel t1 connu par rapport à l'en-tête de synchronisation. En pratique, elle contient plusieurs impulsions de polarités connues régulièrement espacées d'un intervalle temporel t2 correspondant à N4 échantillons du signal numérique.

Cette valeur N4 est choisie de façon à correspondre sensiblement à la longueur du canal de transmission, par exemple de l'ordre de 350 nanosecondes.

Là encore, en théorie, la présence d'une seule impulsion dans la partie P2 permettrait de connaître la réponse impulsionnelle du canal.

Plus précisément, les moyens d'estimation MEST stockent alors à partir de l'instant t1 séparé de la fin de l'en-tête de synchronisation qui est connu puisque la synchronisation a été acquise précédemment, N4 échantillons du signal numérique délivrés par les moyens d'échantillonnage. Ces N4 échantillons représentent la réponse du canal à la transmission de l'impulsion qui a été émise après une durée t1 après la fin de l'en-tête de synchronisation.

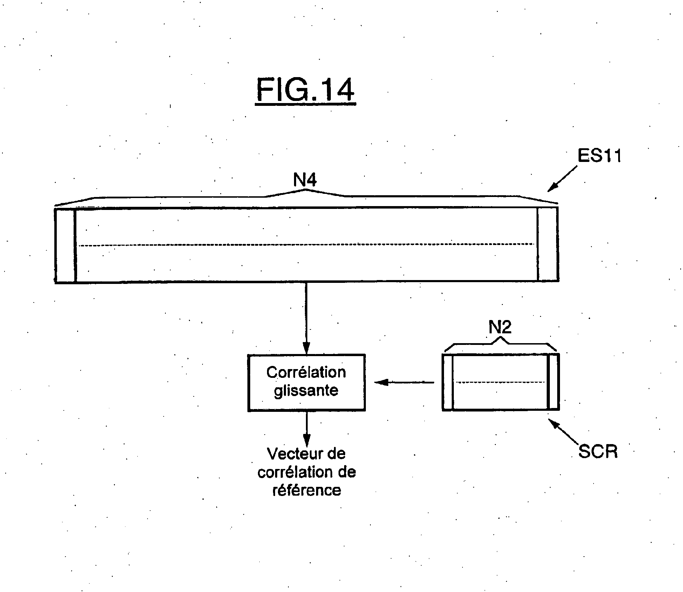

Comme illustré sur la figure 14, les moyens de corrélation des moyens d'estimation vont alors effectuer une corrélation glissante entre l'ensemble ES11 des N4 échantillons stockés et les N2 échantillons de référence du signal de corrélation de référence SCR de la figure 10. Ceci va permettre d'obtenir un vecteur de corrélation de référence ayant N4 valeurs de corrélation de référence. Et, c'est ce vecteur de N4 valeurs de corrélation de référence qui va représenter la réponse impulsionnelle du canal.

Plus précisément, comme en pratique N2 est largement inférieur à N, les moyens de corrélation vont tout d'abord effectuer une première corrélation (qui est en fait une multiplication terme à terme) entre les N2 échantillons de référence et les N2 premiers échantillons du groupe de N échantillons délivrés par les moyens d'échantillonnage. Ceci va donner une première valeur de corrélation. Puis, tous les Δt, les N2 échantillons de référence vont se décaler d'un échantillon de façon à obtenir une nouvelle valeur de corrélation.

Et, cette corrélation glissante va s'effectuer sur l'ensemble ES11 de N4 échantillons du signal numérique.

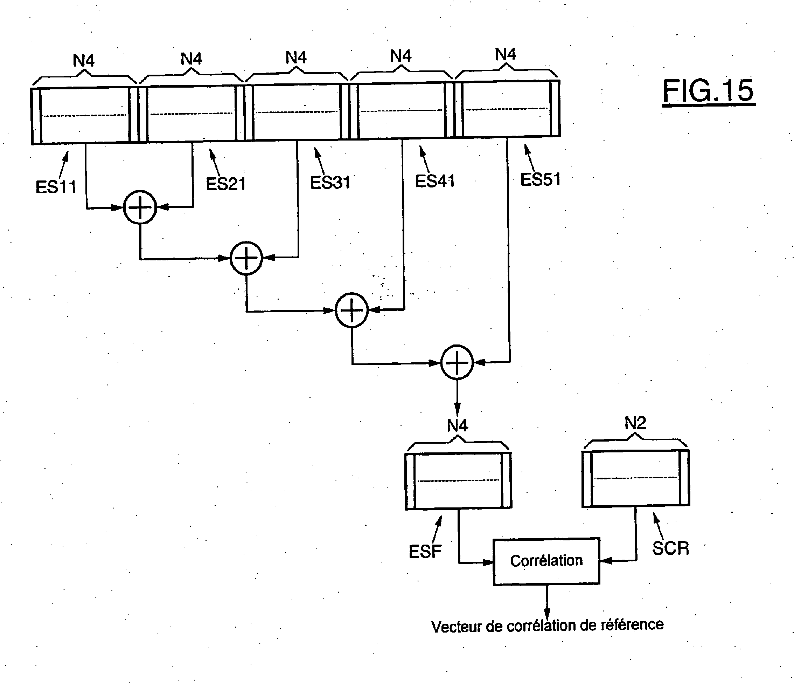

Ceci étant, comme déjà indiqué ci-avant, et puisque le signal SGNR qui arrive à l'antenne est bruité, il est là encore préférable que les moyens d'estimation soient pourvus de moyens MIC aptes également à effectuer une série d'intégrations cohérentes du signal numérique. Plus précisément, comme illustré sur la figure 15, et par analogie avec la figure 13, les moyens MIC des moyens d'estimation MEST vont effectuer des sommations d'échantillons homologues de tous les ensembles ES11-ES51 de N4 échantillons formant la deuxième partie P2 de la trame TRA de façon à obtenir un ensemble final ESF de N4 échantillons sur lequel les moyens de corrélation vont procéder à la corrélation glissante avec le signal de corrélation de référence SCR, de façon à obtenir le vecteur de corrélation de référence ayant N4 valeurs de corrélation de référence.

Les moyens de décodage MDCD vont ensuite procéder au décodage des informations contenues dans la troisième partie P3 de la trame TRA, en utilisant le vecteur des N4 valeurs de corrélation de référence.

Plus précisément, cette troisième partie P3 de la trame, qui se situe avant la partie terminale P4 de cette trame, comporte des impulsions, dites « utiles », qui vont coder les données utiles à transmettre. Là encore, sur la figure 11, tout comme pour le code de synchronisation CSY et la deuxième partie P2, les flèches désignent les positions de référence pref (figure 2) des impulsions dans une modulation PPM. Et, on connaît très précisément le décalage temporel t3 existant entre la fin de la deuxième partie P2 de la trame et la première impulsion utile, ainsi que les différents décalages temporels t4 et t5 séparant les impulsions suivantes.

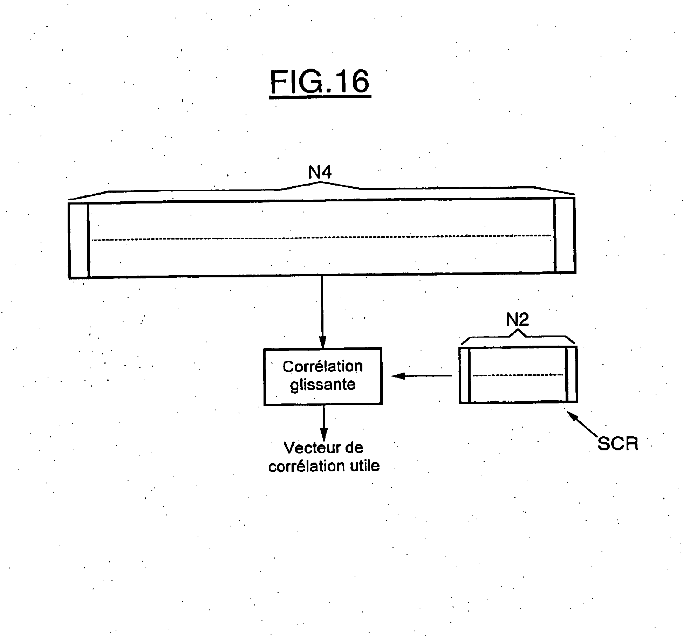

A partir de là, le traitement numérique effectué par les moyens de décodage MDCD comporte, à partir de l'instant supposé de réception d'une impulsion utile courante, le stockage de N4 échantillons du signal numérique délivré par les moyens d'échantillonnage. Puis, les moyens de corrélation MCORR de ces moyens de décodage MDCD vont effectuer une corrélation glissante entre les N4 échantillons stockés et les N2 échantillons de référence (figure 16) de façon à obtenir un vecteur de N4 valeurs utiles de corrélation associé à cette impulsion utile courante.

Puis, les moyens MDCD vont comparer ce vecteur utile de corrélation avec le vecteur de N4 valeur de corrélation de référence temporellement retardé ou temporellement avancé du décalage prévu dans une modulation PPM de façon à déterminer la valeur « 0 » ou « 1 » de la donnée ainsi codée.

Matériellement, les moyens d'échantillonnage et les moyens de traitement numérique peuvent être réalisés en technologie CMOS, ce qui est appréciable sur le plan des coûts de fabrication. Ceci permet également de prévoir des moyens de contrôle MCTL (figure 5) qui pourront placer les moyens d'échantillonnage et/ou les moyens de corrélation dans un état de veille, par exemple pendant des périodes temporelles où le système sait qu'il ne reçoit pas d'impulsion ou bien pendant des périodes où le rapport signal/bruit n'est pas optimal. Ceci permet une économie d'énergie appréciable.

Par ailleurs, les moyens de corrélation peuvent être réalisés par plusieurs corrélateurs en parallèle traitant en parallèle plusieurs groupes de N échantillons, de façon à obtenir une vitesse de traitement compatible avec la fréquence effective d'échantillonnage égale à N.Fe.

Il est également envisageable d'effectuer des intégrations cohérentes pendant la phase de décodage si chaque information utile est étalée sur plusieurs impulsions.

Enfin, en ce qui concerne les intégrations cohérentes d'une façon générale, dans le cas où les impulsions successives seraient espacées de façon irrégulière dans le temps (par exemple selon un code connu), les sommations d'échantillons peuvent tenir compte du décalage temporel entre les impulsions.

## Revendications

1. Procédé de décodage d'un signal incident impulsionnel du type à bande ultra large véhiculant des informations numériques codées en utilisant des impulsions de forme théorique connue, comportant au moins une phase de synchronisation et une phase de décodage , **caractérisé par le fait qu'**il comprend une réception du signal incident de façon à obtenir un signal de base (SB), une comparaison du signal de base avec une référence de façon à obtenir un signal intermédiaire binaire représentatif du signe du signal de base par rapport à ladite référence, un échantillonnage du signal intermédiaire binaire (SI) avec une résolution plus fine que la largeur des impulsions, de façon à obtenir un signal numérique (SNM), et **par le fait que** la phase de synchronisation et la phase de décodage comprennent des traitements numériques du signal numérique comportant une corrélation du signal numérique avec un signal de corrélation de référence (SCR) correspondant à un signal de base théorique issu de la réception d'au moins une impulsion théorique ayant ladite forme théorique connue.

2. Procédé selon la revendication 1, **caractérisé par le fait que** l'échantillonnage comporte une conversion série/parallèle de façon à délivrer successivement à une fréquence de délivrance prédéterminée Fe, des groupes de N échantillons en parallèle, ce qui correspond à une fréquence effective d'échantillonnage du signal intermédiaire (SI) égale à N.Fe.

3. Procédé selon la revendication 2, **caractérisé par le fait que** les impulsions (PLSD) ont une fréquence centrale de quelques GHz, et **par le fait que** la fréquence effective d'échantillonnage est supérieure à 10GHz.

4. Procédé selon la revendication 3, **caractérisé par le fait que** N est une puissance entière de 2, et **par le fait que** la fréquence effective d'échantillonnage est de l'ordre de 20GHz, la fréquence de délivrance Fe étant de l'ordre de 200MHz.

5. Procédé selon l'une des revendications précédentes, **caractérisé par le fait que** le signal de corrélation de référence (SCR) est formé d'échantillons de référence, et **par le fait que** les traitements numériques effectués dans la phase de synchronisation et dans la phase de décodage comportent une corrélation glissante entre les échantillons du signal numérique et les échantillons de référence.

6. Procédé selon la revendication 5 , **caractérisé par le fait que** les informations sont véhiculées au sein de trames (TRA) comprenant chacune une en-tête de synchronisation (ES) comportant au moins un segment (FRGᵢ) de longueur Ts contenant un code de synchronisation (CSY) formé de plusieurs impulsions théoriques, **par le fait que** le signal de référence est formé de N5 échantillons correspondant à une durée de signal égale à Ts et à un signal de base théorique issu de la réception du code de synchronisation, et **par le fait que** le traitement numérique effectué dans la phase de synchronisation lors de la réception d'une en-tête de synchronisation comporte une corrélation glissante entre les N5 échantillons de référence et un ensemble de N3 échantillons du signal numérique correspondant à une durée de signal supérieure à Ts, et une détection du code de synchronisation avec éventuellement des permutations circulaires de ce code à partir du résultat de la corrélation.

7. Procédé selon la revendication 6, **caractérisé par le fait que** l'en-tête de synchronisation comporte plusieurs segments (FRGᵢ) de même longueur Ts contenant respectivement des codes de synchronisation identiques, et **par le fait que** le traitement numérique de synchronisation comporte en outre une série d'intégrations cohérentes du signal numérique.

8. Procédé selon l'une des revendications 1 à 5, **caractérisé par le fait qu'**il comporte en outre une phase d'estimation de la réponse du canal de transmission comprenant également un traitement numérique comportant une corrélation du signal numérique avec le signal de corrélation de référence (SCR).

9. Procédé selon la revendication 8, **caractérisé par le fait que** les informations sont véhiculées au sein de trames (TRA) comprenant chacune une en-tête de synchronisation (ES) et une deuxième partie (P2) contenant au moins une impulsion ayant une polarité connue et décalage temporel connu (t1) par rapport à l'en-tête de synchronisation, **par le fait que** le signal de corrélation de référence (SCR) est formé de N2 échantillons correspondant à un signal de base théorique issu de la réception d'une seule impulsion théorique, et **par le fait que** le traitement numérique effectué dans la phase d'estimation de canal comporte le stockage à partir d'un instant séparé de l'en-tête de synchronisation dudit décalage temporel, d'un nombre prédéterminé N4 d'échantillons du signal numérique, et une corrélation glissante entre les N2 échantillons de référence et l'ensemble de N4 échantillons du signal numérique, de façon à obtenir un vecteur de N4 valeurs de corrélation de référence.

10. Procédé selon la revendication 9, **caractérisé par le fait que** la deuxième partie de la trame (P2) comporte plusieurs impulsions de polarité connue régulièrement espacées d'un intervalle temporel (t2) correspondant à N4 échantillons du signal numérique, et **par le fait que** le traitement numérique effectué dans la phase d'estimation de canal comporte en outre une série d'intégrations cohérentes du signal numérique.

11. Procédé selon l'une des revendications 9 ou 10, **caractérisé par le fait que** la trame comporte une troisième partie (P3) contenant des impulsions dites utiles codant des données utiles, chaque impulsion ayant une position temporelle de référence connue dans la trame, et **par le fait que** le traitement numérique effectué dans la phase de décodage comporte à partir de l'instant supposé de réception d'un impulsion utile courante, le stockage de N4 échantillons du signal numérique, une corrélation glissante entre les N4 échantillons stockés et les N2 échantillons de référence de façon à obtenir un vecteur de N4 valeurs utiles de corrélation associé à cette impulsion utile courante, et la comparaison de ce vecteur utile de corrélation avec le vecteur de N4 valeurs de corrélation de référence, ou éventuellement avec ce vecteur de référence temporellement retardé ou avancé d'un décalage prédéterminé.

12. Dispositif de décodage d'un signal incident impulsionnel du type à bande ultra large véhiculant des informations numériques codées en utilisant des impulsions de forme théorique connue, **caractérisé par le fait qu'**il comprend des moyens d'entrée (ANT) pour recevoir le signal incident et délivrer un signal de base, des moyens de prétraitement (CMP) aptes à comparer le signal de base avec une référence et aptes à délivrer un signal intermédiaire binaire représentatif du signe du signal de base par rapport à ladite référence, des moyens d'échantillonnage (MECH) du signal intermédiaire aptes à effectuer un échantillonnage avec une résolution plus fine que la largeur des impulsions de façon à délivrer un signal numérique, et des moyens numériques (MTN) de traitement comportant des moyens de synchronisation (MSYN) et des moyens de décodage (MDCD) aptes à effectuer une corrélation du signal numérique avec un signal de corrélation de référence correspondant à un signal de base théorique issu de la réception d'au moins une impulsion théorique ayant ladite forme théorique connue.

13. Dispositif selon la revendication 12, **caractérisé par le fait que** les moyens d'échantillonnage (MECH) comportent des moyens de conversion série/parallèle aptes à délivrer successivement à une fréquence de délivrance prédéterminée Fe, des groupes de N échantillons en parallèle, ce qui correspond à une fréquence virtuelle d'échantillonnage du signal intermédiaire égale à N.Fe.

14. Dispositif selon la revendication 13, **caractérisé par le fait que** les moyens de conversion série/parallèle comportent
- un circuit d'horloge programmable (CHP) recevant un signal d'horloge de base ayant la fréquence Fe et délivrant N signaux d'horloge élémentaires ayant tous la même fréquence Fe mais mutuellement temporellement décalés de 1/N.Fe,
- N bascules recevant toutes en entrée le signal intermédiaire, respectivement commandées par les N signaux d'horloge élémentaires, et délivrant respectivement les N échantillons,
- un registre de sortie commandé par le signal d'horloge de base pour stocker les N échantillons délivrés par les N bascules et les délivrer en parallèle à la fréquence de délivrance.

15. Dispositif selon la revendication 14, **caractérisé par le fait que** le circuit d'horloge programmable (CHP) comprend une boucle numérique à verrouillage de phase comportant un oscillateur programmable en anneau (OSC2) délivrant les N signaux d'horloge élémentaires et commandé à partir d'un circuit de commande recevant les sorties respectives de N bascules recevant toutes le signal d'horloge de base et respectivement commandées par les N signaux d'horloge élémentaires.

16. Dispositif selon l'une des revendications 13 à 15, **caractérisé par le fait que** les impulsions ont une fréquence centrale de quelques GHz, et **par le fait que** la fréquence effective d'échantillonnage est supérieure à 10GHz.

17. Dispositif selon la revendication 16, **caractérisé par le fait que** N est une puissance entière de 2, et **par le fait que** la fréquence effective d'échantillonnage est de l'ordre de 20GHz, la fréquence de délivrance Fe étant de l'ordre de 200MHz.

18. Dispositif selon l'une des revendications 12 à 17, **caractérisé par le fait que** les moyens d'échantillonnage (MECH) sont réalisés en technologie CMOS.

19. Dispositif selon la revendication 18, **caractérisé par le fait qu'**il comporte des moyens de contrôle (MCTL) aptes à placer les moyens d'échantillonnage et les moyens numériques de traitement dans un mode de veille au cours d'intervalles temporels prédéterminés.

20. Dispositif selon l'une des revendications 12 à 19, **caractérisé par le fait que** le signal de corrélation de référence (SCR) est formé d'échantillons de référence, et **par le fait que** les traitements numériques effectués par les moyens de synchronisation et par les moyens de décodage comportent une corrélation glissante entre les échantillons du signal numérique et les échantillons de référence.

21. Dispositif selon la revendication 20 , **caractérisé par le fait que** les informations sont véhiculées au sein de trames comprenant chacune une en-tête de synchronisation (ES) comportant au moins un segment (FRGᵢ) de longueur Ts contenant un code de synchronisation formé de plusieurs impulsions théoriques, **par le fait que** le signal de corrélation de référence (SCR) est formé de N5 échantillons correspondant à une durée de signal égale à Ts et à un signal de base théorique issu de la réception du code de synchronisation (CSY), et **par le fait que** le traitement numérique effectué par les moyens de synchronisation lors de la réception d'une en-tête de synchronisation comporte une corrélation glissante entre les N5 échantillons de référence et un ensemble de N3 échantillons du signal numérique correspondant à une durée de signal supérieure à Ts, et une détection du code de synchronisation avec éventuellement des permutations circulaires de ce code à partir du résultat de la corrélation.

22. Dispositif selon la revendication 21, **caractérisé par le fait que** l'en-tête de synchronisation (ES) comporte plusieurs segments (FRGᵢ) de même longueur Ts contenant respectivement des codes de synchronisation identiques, et **par le fait que** les moyens de synchronisation comportent en outre des moyens aptes à effectuer une série d'intégrations cohérentes du signal numérique.

23. Dispositif selon l'une des revendications 12 à 20, **caractérisé par le fait qu'**il comporte en outre des moyens d'estimation de la réponse du canal de transmission (MEST) aptes à effectuer également un traitement numérique comportant une corrélation du signal numérique avec le signal de corrélation de référence.

24. Dispositif selon la revendication 23, **caractérisé par le fait que** les informations sont véhiculées au sein de trames (TRA) comprenant chacune une en-tête de synchronisation (ES) et une deuxième partie (P2) contenant au moins une impulsion ayant une polarité connue et un décalage temporel connu par rapport à l'en-tête de synchronisation, **par le fait que** le signal de corrélation de référence (SCR) est formé de N2 échantillons correspondant à un signal de base théorique issu de la réception d'une seule impulsion théorique, et **par le fait que** le traitement numérique effectué par les moyens d'estimation de canal comporte le stockage à partir d'un instant séparé de l'en-tête de synchronisation dudit décalage temporel, d'un nombre prédéterminé N4 d'échantillons du signal numérique, et une corrélation glissante entre les N2 échantillons de référence et l'ensemble de N4 échantillons du signal numérique, de façon à obtenir un vecteur de N4 valeurs de corrélation de référence.

25. Dispositif selon la revendication 24, **caractérisé par le fait que** la deuxième partie de la trame (P2) comporte plusieurs impulsions de polarité connue régulièrement espacées d'un intervalle temporel correspondant à N4 échantillons du signal numérique, et **par le fait que** les moyens d'estimation de canal comportent en outre des moyens aptes à effectuer une série d'intégrations cohérentes du signal numérique.

26. Dispositif selon l'une des revendications 24 ou 25, **caractérisé par le fait que** la trame comporte une troisième partie (P3) contenant des impulsions dites utiles codant des données utiles, chaque impulsion ayant une position temporelle de référence connue dans la trame, et **par le fait que** le traitement numérique effectué par les moyens de décodage comporte à partir de l'instant supposé de réception d'un impulsion utile courante, le stockage de N4 échantillons du signal numérique, une corrélation glissante entre les N4 échantillons stockés et les N2 échantillons de référence de façon à obtenir un vecteur de N4 valeurs utiles de corrélation associé à cette impulsion utile courante, et la comparaison de ce vecteur utile de corrélation avec le vecteur de N4 valeurs de corrélation de référence, ou éventuellement avec ce vecteur de référence temporellement retardé ou avancé d'un décalage prédéterminé.

27. Terminal d'un système de transmission sans fil, par exemple du type réseau local, **caractérisé par le fait qu'**il incorpore un dispositif selon l'une des revendications 12 à 26.

## Patentansprüche

1. Verfahren zur Decodierung eines eintreffenden Impulssignals vom Ultrabreitbandtyp, das codierte digitale Informationen transportiert, wobei Impulse von bekannter theoretischer Form verwendet werden, umfassend mindestens eine Synchronisationsphase und eine Decodierungsphase, **dadurch gekennzeichnet, dass** es einen Empfang des eintreffenden Signals, um ein Basissignal (SB) zu erhalten, einen Vergleich des Basissignals mit einer Referenz, um ein binäres Zwischensignal, das für das Vorzeichen des Basissignals in Bezug zur Referenz repräsentativ ist, zu erhalten, eine Stichprobe des binären Zwischensignals (SI) mit einer feineren Auflösung als die Breite der Impulse, um ein digitales Signal (SNM) zu erhalten, umfasst, und dadurch, dass die Synchronisationsphase und die Decodierungsphase digitale Bearbeitungen des digitalen Signals aufweisen, umfassend eine Korrelation des digitalen Signals mit einem Referenzkorrelationssignal (SCR), das einem theoretischen Basissignal entspricht, das vom Empfang mindestens eines theoretischen Impulses mit der bekannten theoretischen Form stammt.

2. Verfahren nach Anspruch 1, **dadurch gekennzeichnet, dass** die Stichprobe eine Umwandlung seriell/parallel umfasst, um nacheinander mit einer vorbestimmten Lieferfrequenz Fe Gruppen von N Proben parallel zu liefern, was einer tatsächlichen Stichprobenfrequenz des Zwischensignals (SI) gleich N.Fe entspricht.

3. Verfahren nach Anspruch 2, **dadurch gekennzeichnet, dass** die Impulse (PLSD) eine zentrale Frequenz von einigen GHz haben, und dadurch, dass die tatsächliche Stichprobenfrequenz höher als 10 GHz beträgt.

4. Verfahren nach Anspruch 3, **dadurch gekennzeichnet, dass** N eine ganzzahlige Leistung von 2 ist, und dadurch, dass die tatsächliche Stichprobenfrequenz ungefähr 20 GHz beträgt, wobei die Lieferfrequenz Fe ungefähr 200 MHz beträgt.

5. Verfahren nach einem der vorhergehenden Ansprüche, **dadurch gekennzeichnet, dass** das Referenzkorrelationssignal (SCR) von Referenzproben gebildet ist, und dadurch, dass die in der Synchronisationsphase und der Decodierungsphase durchgeführten digitalen Bearbeitungen eine gleitende Korrelation zwischen den Proben des digitalen Signals und den Referenzproben umfassen.

6. Verfahren nach Anspruch 5, **dadurch gekennzeichnet, dass** die Informationen in Rastern (TRA) transportiert werden, umfassend jeweils eine Synchronisationskopfzeile (ES), umfassend mindestens ein Segment (FRGᵢ) der Länge Ts, das einen Synchronisationscode (CSY) enthält, der von mehreren theoretischen Impulsen gebildet ist, dadurch, dass das Referenzsignal von N5 Proben gebildet ist, die einer Signaldauer gleich Ts und einem theoretischen Basissignal, das vom Empfang des Synchronisationscodes stammt, entsprechen, und dadurch, dass die in der Synchronisationsphase beim Empfang einer Synchronisationskopfzeile durchgeführte digitale Bearbeitung eine gleitende Korrelation zwischen den N5 Referenzproben und einer Gesamtheit von N3 Proben des digitalen Signals, entsprechend einer längeren Signaldauer als Ts, und eine Erfassung des Synchronisationscodes mit eventuell zirkulären Permutationen dieses Codes auf Basis des Resultats der Korrelation umfasst.

7. Verfahren nach Anspruch 6, **dadurch gekennzeichnet, dass** die Synchronisationskopfzeile mehrere Segmente (FRGᵢ) derselben Länge Ts umfasst, die jeweils identische Synchronisationscodes enthalten, und dadurch, dass die digitale Synchronisationsbearbeitung ferner eine Reihe von kohärenten Integrationen des digitalen Signals umfasst.

8. Verfahren nach einem der Ansprüche 1 bis 5, **dadurch gekennzeichnet, dass** es ferner eine Phase der Bewertung der Antwort des Übertragungskanals aufweist, ebenfalls umfassend eine digitale Bearbeitung, umfassend eine Korrelation des digitalen Signals mit dem Referenzkorrelationssignal (SCR).

9. Verfahren nach Anspruch 8, **dadurch gekennzeichnet, dass** die Informationen in Rastern (TRA) transportiert werden, umfassend jeweils eine Synchronisationskopfzeile (ES) und einen zweiten Teil (P2), der mindestens einen Impuls mit einer bekannten Polarität und einer bekannten Zeitverschiebung (t1) in Bezug zur Synchronisationskopfzeile enthält, dadurch, dass das Referenzkorrelationssignal (SCR) von N2 Proben gebildet ist, die einem theoretischen Basissignal entsprechen, das vom Empfang eines einzigen theoretischen Impulses stammt, und dadurch, dass die in der Kanalbewertungsphase durchgeführte digitale Bearbeitung auf Basis eines von der Synchronisationskopfzeile getrennten Zeitpunkts die Speicherung der Zeitverschiebung einer vorbestimmten Anzahl von N4 Proben des digitalen Signals und eine gleitende Korrelation zwischen den N2 Referenzproben und der Gesamtheit von N4 Proben des digitalen Signals umfasst, um einen Vektor von N4 Referenzkorrelationswerten zu erhalten.

10. Verfahren nach Anspruch 9, **dadurch gekennzeichnet, dass** der zweite Teil des Rasters (P2) mehrere Impulse von bekannter Polarität, die um ein Zeitintervall (t2) entsprechend N4 Proben des digitalen Signals regelmäßig beabstandet sind, umfasst, und dadurch, dass die in der Kanalbewertungsphase durchgeführte digitale Bearbeitung ferner eine Reihe von kohärenten Integrationen des digitalen Signals umfasst.

11. Verfahren nach einem der Ansprüche 9 oder 10, **dadurch gekennzeichnet, dass** der Raster einen dritten Teil (P3) umfasst, der so genannte nützliche Impulse enthält, die nützliche Daten codieren, wobei jeder Impuls eine bekannte Referenzzeitposition in dem Raster hat, und dadurch, dass die in der Decodierungsphase durchgeführte digitale Bearbeitung ausgehend von dem angenommenen Empfangszeitpunkt eines laufenden nützlichen Impulses die Speicherung von N4 Proben des digitalen Signals, eine gleitende Korrelation zwischen den N4 gespeicherten Proben und den N2 Referenzproben, um einen Vektor von N4 nützlichen Korrelationswerten in Verbindung mit diesem laufenden nützlichen Impuls zu erhalten, und den Vergleich dieses nützlichen Korrelationsvektors mit dem Vektor von N4 Referenzkorrelationswerten oder eventuell mit diesem zeitlich verzögerten oder vorlaufenden Referenzvektor einer vorbestimmten Verschiebung umfasst.

12. Vorrichtung zur Decodierung eines eintreffenden Impulssignals vom Ultrabreitbandtyp, das codierte digitale Informationen transportiert, wobei Impulse von bekannter theoretischer Form verwendet werden, **dadurch gekennzeichnet, dass** sie Eingangsmittel (ANT) für den Empfang des eintreffenden Signals und die Lieferung eines Basissignals, Vorbearbeitungsmittel (CMP), die geeignet sind, das Basissignal mit einer Referenz zu vergleichen und ein binäres Zwischensignal zu liefern, das für das Vorzeichen des Basissignals in Bezug zur Referenz repräsentativ ist, Stichprobenmittel (MECH) des Zwischensignals, die geeignet sind, eine Stichprobe mit einer feineren Auflösung als die Breite der Impulse durchzuführen, um ein digitales Signal zu liefern, und digitale Bearbeitungsmittel (MTN) umfasst, umfassend Synchronisationsmittel (MSYN) und Decodierungsmittel (MDCD), die geeignet sind, eine Korrelation des digitalen Signals mit einem Referenzkorrelationssignal entsprechend einem theoretischen Basissignal, das vom Empfang mindestens eines theoretischen Impulses mit der bekannten theoretischen Form stammt, durchzuführen.

13. Vorrichtung nach Anspruch 12, **dadurch gekennzeichnet, dass** die Stichprobenmittel (MECH) Mittel zur Umwandlung seriell/parallel umfassen, die geeignet sind, nacheinander mit einer vorbestimmten Lieferfrequenz Fe Gruppen von N Proben parallel zu liefern, was einer virtuellen Stichprobenfrequenz des Zwischensignals gleich N.Fe entspricht.

14. Vorrichtung nach Anspruch 13, **dadurch gekennzeichnet, dass** die Mittel zur Umwandlung seriell/parallel umfassen:
- eine programmierbare Zeitschaltung (CHP), die ein Basiszeitsignal mit der Frequenz Fe empfängt und N elementare Zeitsignale liefert, die alle dieselbe Frequenz Fe haben, aber wechselseitig zeitlich um 1/N.Fe verschoben sind,
- N Kippschaltungen, die alle am Eingang das Zwischensignal empfangen und jeweils von den N elementaren Zeitsignalen gesteuert werden und jeweils die N Proben liefern,
- ein Ausgangsregister, das von dem Basiszeitsignal gesteuert wird, um die N Proben, die von den N Kippschaltungen geliefert werden, zu speichern und sie parallel mit der Lieferfrequenz zu liefern.

15. Vorrichtung nach Anspruch 14, **dadurch gekennzeichnet, dass** die programmierbare Zeitschaltung (CHP) eine digitale Schleife mit Phasenverriegelung aufweist, umfassend einen programmierbaren ringförmigen Oszillator (OSC2), der die N elementaren Zeitsignale liefert und von einer Steuerschaltung gesteuert wird, die die jeweiligen Ausgänge von N Kippschaltungen, die alle das Basiszeitsignal empfangen und jeweils von den N elementaren Zeitsignalen gesteuert werden, empfängt.

16. Vorrichtung nach einem der Ansprüche 13 bis 15, **dadurch gekennzeichnet, dass** die Impulse eine zentrale Frequenz von einigen GHz haben, und dadurch, dass die tatsächliche Stichprobenfrequenz höher als 10 GHz ist.

17. Vorrichtung nach Anspruch 16, **dadurch gekennzeichnet, dass** N eine ganzzahlige Leistung von 2 ist, und dadurch, dass die tatsächliche Stichprobenfrequenz ungefähr 20 GHz beträgt, wobei die Lieferfrequenz Fe ungefähr 200 MHz beträgt.

18. Vorrichtung nach einem der Ansprüche 12 bis 17, **dadurch gekennzeichnet, dass** die Stichprobenmittel (MECH) in der CMOS-Technologie ausgeführt sind.

19. Vorrichtung nach Anspruch 18, **dadurch gekennzeichnet, dass** sie Kontrollmittel (MCTL) umfasst, die geeignet sind, die Stichprobenmittel und die digitalen Bearbeitungsmittel in einem Standby-Modus während vorbestimmter Zeitintervalle anzuordnen.

20. Vorrichtung nach einem der Ansprüche 12 bis 19, **dadurch gekennzeichnet, dass** das Referenzkorrelationssignal (SCR) von Referenzproben gebildet ist, und dadurch, dass die von den Synchronisationsmitteln und den Decodierungsmitteln durchgeführten digitalen Bearbeitungen eine gleitende Korrelation zwischen den Proben des digitalen Signals und den Referenzproben umfassen.

21. Vorrichtung nach Anspruch 20, **dadurch gekennzeichnet, dass** die Informationen in Rastern transportiert werden, umfassend jeweils eine Synchronisationskopfzeile (ES), umfassend mindestens ein Segment (FRGᵢ) der Länge Ts, das einen Synchronisationscode enthält, der von mehreren theoretischen Impulsen gebildet ist, dadurch, dass das Referenzkorrelationssignal (SCR) von N5 Proben gebildet ist, die einer Signaldauer gleich Ts und einem theoretischen Basissignal, das vom Empfang des Synchronisationscodes (CSY) stammt, entsprechen, und dadurch, dass die von den Synchronisationsmitteln beim Empfang einer Synchronisationskopfzeile durchgeführte digitale Bearbeitung eine gleitende Korrelation zwischen den N5 Referenzproben und einer Gesamtheit von N3 Proben des digitalen Signals, entsprechend einer längeren Signaldauer als Ts, und eine Erfassung des Synchronisationscodes mit eventuell zirkulären Permutationen dieses Codes auf Basis des Resultats der Korrelation umfasst.

22. Vorrichtung nach Anspruch 21, **dadurch gekennzeichnet, dass** die Synchronisationskopfzeile (ES) mehrere Segmente (FRGᵢ) derselben Länge Ts umfasst, die jeweils identische Synchronisationscodes enthalten, und dadurch, dass die Synchronisationsmittel ferner Mittel umfassen, die geeignet sind, eine Reihe von kohärenten Integrationen des digitalen Signals durchzuführen.

23. Vorrichtung nach einem der Ansprüche 12 bis 20, **dadurch gekennzeichnet, dass** sie ferner Mittel zur Bewertung der Antwort des Übertragungskanals (MEST) umfasst, die geeignet sind, ebenfalls eine digitale Bearbeitung durchzuführen, umfassend eine Korrelation des digitalen Signals mit dem Referenzkorrelationssignal.

24. Vorrichtung nach Anspruch 23, **dadurch gekennzeichnet, dass** die Informationen in Rastern (TRA) transportiert werden, umfassend jeweils eine Synchronisationskopfzeile (ES) und einen zweiten Teil (P2), der mindestens einen Impuls mit einer bekannten Polarität und einer bekannten Zeitverschiebung in Bezug zur Synchronisationskopfzeile enthält, dadurch, dass das Referenzkorrelationssignal (SCR) von N2 Proben gebildet ist, die einem theoretischen Basissignal entsprechen, das vom Empfang eines einzigen theoretischen Impulses stammt, und dadurch, dass die von den Kanalbewertungsmitteln durchgeführte digitale Bearbeitung auf Basis eines von der Synchronisationskopfzeile getrennten Zeitpunkts die Speicherung der Zeitverschiebung einer vorbestimmten Anzahl von N4 Proben des digitalen Signals und eine gleitende Korrelation zwischen den N2 Referenzproben und der Gesamtheit von N4 Proben des digitalen Signals umfasst, um einen Vektor von N4 Referenzkorrelationswerten zu erhalten.

25. Vorrichtung nach Anspruch 24, **dadurch gekennzeichnet, dass** der zweite Teil des Rasters (P2) mehrere Impulse von bekannter Polarität umfasst, die um ein Zeitintervall entsprechend N4 Proben des digitalen Signals regelmäßig beabstandet sind, und dadurch, dass die Kanalbewertungsmittel ferner Mittel umfassen, die geeignet sind, eine Reihe von kohärenten Integrationen des digitalen Signals durchzuführen.

26. Vorrichtung nach einem der Ansprüche 24 oder 25, **dadurch gekennzeichnet, dass** der Raster einen dritten Teil (P3) umfasst, der so genannte nützliche Impulse, die nützliche Daten codieren, umfasst, wobei jeder Impuls eine bekannte Referenzzeitposition in dem Raster hat, und dadurch, dass die von den Decodierungsmitteln durchgeführte digitale Bearbeitung ausgehend von dem angenommenen Empfangszeitpunkt eines laufenden nützlichen Impulses die Speicherung von N4 Proben des digitalen Signals, eine gleitende Korrelation zwischen den N4 gespeicherten Proben und den N2 Referenzproben, um einen Vektor von N4 nützlichen Korrelationswerten zu erhalten, der mit diesem laufenden nützlichen Impuls verbunden ist, und den Vergleich dieses nützlichen Korrelationsvektors mit dem Vektor von N4 Referenzkorrelationswerten oder eventuell mit diesem zeitlich verzögerten oder vorlaufenden Referenzvektor einer vorbestimmten Verschiebung umfasst.

27. Terminal eines drahtlosen Übertragungssystems, beispielsweise vom Typ lokales Netz, **dadurch gekennzeichnet, dass** es eine Vorrichtung nach einem der Ansprüche 12 bis 26 umfasst.

## Claims

1. Method for decoding an incident pulse signal of the ultra wideband type conveying digital information coded using pulses of known theoretical shape, comprising at least one synchronization phase and one decoding phase, **characterized in that** it comprises a reception of the incident signal so as to obtain a base signal (SB), a comparison of the base signal with a reference so as to obtain a binary intermediate signal representative of the sign of the base signal with respect to said reference, a sampling of the binary intermediate signal (SI) with a finer resolution than the width of the pulses, so as to obtain a digital signal (SNM), and **in that** the synchronization phase and the decoding phase comprise digital processings of the digital signal comprising a correlation of the digital signal with a reference correlation signal (SCR) corresponding to a theoretical base signal arising from the reception of at least one theoretical pulse having the said known theoretical shape.

2. Method according to Claim 1, **characterized in that** the sampling comprises a serial-to-parallel conversion in such a way as to successively deliver at a predetermined delivery frequency Fe, groups of N samples in parallel, which corresponds to an effective frequency of sampling of the intermediate signal (SI) equal to N.Fe.

3. Method according to Claim 2, **characterized in that** the pulses (PLSD) have a central frequency of a few GHz, and **in that** the effective sampling frequency is greater than 10 GHz.

4. Method according to Claim 3, **characterized in that** N is an integer power of 2, and **in that** the effective sampling frequency is of the order of 20 GHz, the delivery frequency Fe being of the order of 200 MHz.

5. Method according to one of the preceding claims, **characterized in that** the reference correlation signal (SCR) is formed of reference samples, and **in that** the digital processings performed in the synchronization phase and in the decoding phase comprise a sliding correlation between the samples of the digital signal and the reference samples.

6. Method according to Claim 5, **characterized in that** the information is conveyed within frames (TRA) each comprising a synchronization header (ES) comprising at least one segment (FRGᵢ) of length Ts containing a synchronization code (CSY) formed of several theoretical pulses, **in that** the reference signal is formed of N5 samples corresponding to a signal duration equal to Ts and to a theoretical base signal arising from the reception of the synchronization code, and **in that** the digital processing performed in the synchronization phase during the reception of a synchronization header comprises a sliding correlation between the N5 reference samples and a set of N3 samples of the digital signal corresponding to a signal duration greater than Ts, and a detection of the synchronization code possibly with circular permutations of this code on the basis of the result of the correlation.

7. Method according to Claim 6, **characterized in that** the synchronization header comprises several segments (FRGᵢ) of the same length Ts each containing identical synchronization codes, and **in that** the digital synchronization processing furthermore comprises a series of coherent integrations of the digital signal.

8. Method according to one of Claims 1 to 5, **characterized in that** it furthermore comprises a phase of estimating the response of the transmission channel also comprising a digital processing comprising a correlation of the digital signal with the reference correlation signal (SCR).

9. Method according to Claim 8, **characterized in that** the information is conveyed within frames (TRA) each comprising a synchronization header (ES) and a second part (P2) containing at least one pulse having a known polarity and known time shift (t1) with respect to the synchronization header, **in that** the reference correlation signal (SCR) is formed of N2 samples corresponding to a theoretical base signal arising from the reception of a single theoretical pulse, and **in that** the digital processing performed in the channel estimation phase comprises the storage beginning at an instant separated from the synchronization header by the said time shift, of a predetermined number N4 of samples of the digital signal, and a sliding correlation between the N2 reference samples and the set of N4 samples of the digital signal, so as to obtain a vector of N4 reference correlation values.

10. Method according to Claim 9, **characterized in that** the second part of the frame (P2) comprises several pulses of known polarity spaced regularly apart by a time interval (t2) corresponding to N4 samples of the digital signal, and **in that** the digital processing performed in the channel estimation phase furthermore comprises a series of coherent integrations of the digital signal.

11. Method according to one of Claims 9 and 10, **characterized in that** the frame comprises a third part (P3) containing so-called useful pulses coding useful data, each pulse having a known reference time position in the frame, and **in that** the digital processing performed in the decoding phase comprises, beginning at the assumed instant of reception of a current useful pulse, the storage of N4 samples of the digital signal, a sliding correlation between the N4 stored samples and the N2 reference samples so as to obtain a vector of N4 useful correlation values which is associated with this current useful pulse, and the comparison of this useful correlation vector with the vector of N4 reference correlation values, or possibly with this reference vector temporally delayed or advanced by a predetermined shift.

12. Device for decoding an incident pulse signal of the ultra wideband type conveying digital information coded using pulses of known theoretical shape, **characterized in that** it comprises input means (ANT) for receiving the incident signal and delivering a base signal, preprocessing means (CMP) suitable for comparing the base signal with a reference and suitable for delivering a binary intermediate signal representative of the sign of the base signal with respect to said reference, means (MECH) of sampling the intermediate signal suitable for performing a sampling with a finer resolution than the width of the pulses so as to deliver a digital signal, and digital processing means (MTN) comprising synchronization means (MSYN) and decoding means (MDCD) suitable for performing a correlation of the digital signal with a reference correlation signal corresponding to a theoretical base signal arising from the reception of at least one theoretical pulse having the said known theoretical shape.

13. Device according to Claim 12, **characterized in that** the sampling means (MECH) comprise serial-to-parallel conversion means suitable for successively delivering at a predetermined delivery frequency Fe, groups of N samples in parallel, which corresponds to a virtual frequency of sampling of the intermediate signal equal to N.Fe.

14. Device according to Claim 13, **characterized in that** the serial-to-parallel conversion means comprise
- a programmable clock circuit (CHP) receiving a base clock signal having the frequency Fe and delivering N elementary clock signals all having the same frequency Fe but temporally shifted by 1/N.Fe with respect to each other,
- N flip-flops all receiving at the input the intermediate signal, respectively controlled by the N elementary clock signals, and respectively delivering the N samples,
- an output register controlled by the base clock signal to store the N samples delivered by the N flip-flops and deliver them in parallel at the delivery frequency.

15. Device according to Claim 14, **characterized in that** the programmable clock circuit (CHP) comprises a digital phase-locked loop including a programmable ring oscillator (OSC2) delivering the N elementary clock signals and controlled from a control circuit receiving the respective outputs of N flip-flops all receiving the base clock signal and respectively controlled by the N elementary clock signals.

16. Device according to one of Claims 13 to 15, **characterized in that** the pulses have a central frequency of a few GHz, and **in that** the effective sampling frequency is greater than 10 GHz.

17. Device according to Claim 16, **characterized in that** N is an integer power of 2, and **in that** the effective sampling frequency is of the order of 20 GHz, the delivery frequency Fe being of the order of 200 MHz.

18. Device according to one of Claims 12 to 17, **characterized in that** the sampling means (MECH) are implemented in CMOS technology.

19. Device according to Claim 18, **characterized in that** it includes control means (MCTL) intended to place the sampling means and the digital processing means into a standby mode during predetermined time intervals.

20. Device according to one of Claims 12 to 19, **characterized in that** the reference correlation signal (SCR) is formed of reference samples, and **in that** the digital processings performed by the synchronization means and by the decoding means comprise a sliding correlation between the samples of the digital signal and the reference samples.

21. Device according to Claim 20, **characterized in that** the information is conveyed within frames each comprising a synchronization header (ES) comprising at least one segment (FRGᵢ) of length Ts containing a synchronization code formed of several theoretical pulses, **in that** the reference correlation signal (SCR) is formed of N5 samples corresponding to a signal duration equal to Ts and to a theoretical base signal arising from the reception of the synchronization code (CSY), and **in that** the digital processing performed by the synchronization means during the reception of a synchronization header comprises a sliding correlation between the N5 reference samples and a set of N3 samples of the digital signal corresponding to a signal duration greater than Ts, and a detection of the synchronization code possibly with circular permutations of this code on the basis of the result of the correlation.

22. Device according to Claim 21, **characterized in that** the synchronization header (ES) comprises several segments (FRGᵢ) of the same length Ts each containing identical synchronization codes, and **in that** the synchronization means furthermore comprise means suitable for performing a series of coherent integrations of the digital signal.

23. Device according to one of Claims 12 to 20, **characterized in that** it furthermore comprises means for estimating the response of the transmission channel (MEST) suitable for also performing a digital processing comprising a correlation of the digital signal with the reference correlation signal.

24. Device according to Claim 23, **characterized in that** the information is conveyed within frames (TRA) each comprising a synchronization header (ES) and a second part (P2) containing at least one pulse having a known polarity and known time shift with respect to the synchronization header, **in that** the reference correlation signal (SCR) is formed of N2 samples corresponding to a theoretical base signal arising from the reception of a single theoretical pulse, and **in that** the digital processing performed by the channel estimation means comprises the storage beginning at an instant separated from the synchronization header by the said time shift, of a predetermined number N4 of samples of the digital signal, and a sliding correlation between the N2 reference samples and the set of N4 samples of the digital signal, so as to obtain a vector of N4 reference correlation values.

25. Device according to Claim 24, **characterized in that** the second part of the frame (P2) comprises several pulses of known polarity spaced regularly apart by a time interval corresponding to N4 samples of the digital signal, and **in that** the channel estimation means furthermore comprise means suitable for performing a series of coherent integrations of the digital signal.

26. Device according to one of Claims 24 and 25, **characterized in that** the frame comprises a third part (P3) containing so-called useful pulses coding useful data, each pulse having a known reference time position in the frame, and **in that** the digital processing performed by the decoding means comprises, beginning at the assumed instant of reception of a current useful pulse, the storage of N4 samples of the digital signal, a sliding correlation between the N4 stored samples and the N2 reference samples so as to obtain a vector of N4 useful correlation values which is associated with this current useful pulse, and the comparison of this useful correlation vector with the vector of N4 reference correlation values, or possibly with this reference vector temporally delayed or advanced by a predetermined shift.

27. Terminal of a wireless transmission system, for example of the local network type, **characterized in that** it incorporates a device according to one of Claims 12 to 26.
